# EUROPEAN PATENT APPLICATION

(11) **EP 2 708 671 A1**
(43) Date of publication of application: **19.03.2014**
(21) Application number: 11865230.4
(22) Date of filing: 10.05.2011
(51) Int. Cl.: E04C 2/52, E04B 5/48

(54) **METHOD FOR INTEGRATING BUILDING FACILITIES IN A MULTIFUNCTIONAL FACING OR FLOOR AND RETICULAR ASSEMBLY FOR CARRYING OUT SAID INTEGRATION**

(71) Applicant: DIAZ MAGRO, Tomas, 28221 Majadahonda (Madrid) (ES)
(72) Inventor: DIAZ MAGRO, Tomas, 28221 Majadahonda (Madrid) (ES)
(74) Representative: Tari Lazaro, Aida
(86) International application number: PCT/ES2011/070335
(87) International publication number: WO 2012/152958

(57) **Abstract**

Method and assembly for integrating facilities in buildings. The method involves making hollow nodes in the facings. Said nodes establish a housing with accesses for the passage and connection of facilities via channels which interconnect the nodes forming a network. They may incorporate the elements of the facilities and/or allow the latter to pass through. The reticular assembly is formed by modules which include a hollow box in the central part thereof with lateral holes, from which assembly the following radially start: channels formed by tubular pipes, a removable cover and optionally an extendable accessory.

## Description

### OBJECT OF THE INVENTION

As stated in the title of this specification, the invention in question refers to a method for integrating building installations into a multifunctional facing or floor and a reticulated assembly for carrying out said integration.

More specifically, the object of the invention revolves around a method for improving the distribution of the installations in buildings, which is configured as a new combined system making it possible to integrate all of the installations inherent to buildings into one single floor, facing or working plane.

Technically, the method for integrating the installations is based on the implementation of a reticulated assembly of nodes and channels connecting them arranged in network fashion, in which each node comprises a pore or space of services designed as a space shared by the different functional levels incorporated into the floor or facing, from which it is possible to inspect or make the pertinent changes in said installations such that it will be possible to alter them throughout the course of the useful life of the building by configuring an integrated, multifunctional management system for the services and installations inherent to the architecture, said reticulated assembly of nodes and channels preferably being comprised by modular elements which are integrated into the facing.

### FIELD OF APPLICATION OF THE INVENTION

The field of application of the invention described herein is encompassed within the technical sector of the construction industry, focusing more specifically on the field of the manufacture and placement and incorporation of the equipment, devices and similar elements intended for use in the organization and distribution of the different utility installations (air, water, gas, lighting, telecommunications, etc.) and their lines.

### BACKGROUND OF THE INVENTION

The growing need of equipping buildings with the suitable comfort and the engineering design features common to today's world has made it necessary to provide the installations-related architectural spaces with progressively more intercrossing and wide-ranging installations, therefore taking up major volumes of interior architectural space. This growing volume-related need is combined with the verifiable fact that said installations - air conditioning and heating ducts, wiring, lighting, diffuser elements, etc. are installed spread around and sometimes randomly, throughout different, progressively more invasive planes, thus further worsening the problems of modular adjustment and industrial standardization commonly encountered in architecture today. These facilities are also designed and built without making provision for the need - now being required to a progressively greater degree - of their being able to be modified throughout the course of the buildings' useful life in keeping with new programmatic or functional requirements.

This situation leads to a juncture which can be summarized into three characteristics: Firstly, conventional installations take up large volumes of space on building interiors, it being estimated (especially in office or rotational buildings) that nearly one third of the total available space is taken up by suspended ceilings, raised-access floors, utility conduits, etc. Secondly, the installations are scattered networks, spreading out over different surfaces or planes coordinated very little with one another. Lastly, the installations are planned statically, as systems fixed in time and inflexible for adapting to the new functional needs or requirements of buildings throughout their useful life.

Therefore, the objective pursued by the invention described herein is to develop a new method for organizing and distributing the installations in buildings which will make it possible to avoid the drawbacks of the conventional systems, it being necessary to point out that, as a reference to the current state of the art, the applicant is not aware of the existence of any other system or invention of a similar application which is of the technical, structural and constituent characteristics similar to that of the method and reticulated assembly advocated herein, the characterizing details of which are suitably stated in the final claims attached to the specification thereof set out herein.

### EXPLANATION OF THE INVENTION

The invention described herein provides a solution to the previouslydescribed deficiencies on being a system for integrating the installations which makes it possible to substantially reduce the volume of interior space taken up by the installations inherent to a installations by concentrating them on one sole plane of multifunctional services - floor or technical facing - capable also of flexibly and dynamically adapting to the changes in requirements arising out of program modifications which may take place over the course of time during the life of the buildings.

The main element of the system proposed which makes the features thereof possible is a technical pore or node consisting of a void or opening made in the floor or facing, preferably circular in appearance although it may also be of polyhedral shapes, which is designed as a multifunctional access point to the different installations integrated into the floor or facing, thus assuring the presence of one single formal and functional code on the working surface.

This node is envisioned as a space - integrated into the floor, wall, ceiling or furnishings (in any case, always on one single functional plane) - for making possible the passage, service and connection of the different installations with which the architectural spaces are outfitted.

For this purpose, the system consists of two parts. The first part is that of the technical node ("container") proper, envisioned as a fixed chassis or mechanical body which is incorporated integrated into the surface to be treated. The second is, in turn, that of the "contents", conceived as an accessible area or housing attended by way of the node accesses, capable of housing the mechanical assemblies or parts of different functions or even combined with one another in one same section.

The main feature of the method proposed is the system of technical nodes which serve as true vertical (or horizontal, depending on the position of the facing) technical bays, the empty space of which can be occupied, flexibly, by the terminals of the installations required for the use of the building throughout the course of the useful life of the building.

The technical nodes comprise a network of vertical (or horizontal) "micro-conduits" for installations completely multipurpose in their possible uses.

It must be underlined that the multi-functionality of the system is possible because the vertical (or horizontal) bay of the node takes in the existence of a telescopic box or of a similar flexible supplement which may or may not comprise part of the assembly for isolating each function, such that, in the area inside the technical node - along the length of its vertical (or horizontal) projection- it is possible to house each mechanism or apparatus of the specific system for which each one provides a solution.

Thus, the space inside the technical node can function as an electrical outlet or stopcock, recessed light, screen, a surface pivot turn - panels, doors, screens- as well as allowing for the passage of pipes or ducts of any type of installation - air, water, electrical networks, gas, etc.

In turn, the aforementioned telescopic or moveable supplement simplifies and provides the service selected with sole functioning, doing away with any problems resulting from co-existing with other services.

On the aforesaid nodes being integrated into the available thickness of the facing - floor, ceiling, wall or furnishings- they do not involve any lessening of the capacity of the spaces served nor do they create any type of protrusion or physical overlapping in the continuity of the facings where they are integrated.

Each technical node is additionally assisted mechanically and energy-wise by a network of channels, the intersection of which defines the location of said technical nodes, these two elements, that is to say, the nodes and the channels, forming the reticulated assembly making it possible to carry out the integration of the installations into the facing.

The layout of this network of channels is determined by stringent geometrics in terms of the density of the demand and of all other functional and aesthetic requirements of each individual project.

This network of channels, which comprise functional passageways and which is of the geometric proportions and mechanical capacities suitable for carrying out the different functions required, is structured by means of the technical nodes, which serve as the tie-in and internal connection element for the assembly (i.e., as the physical and design-related connection between the two subsystems of the equipment of the invention: the "container" and the "contents").

Therefore, the method and the reticulated assembly, comprised by the channels and the technical nodes created jointly, makes full accessibility to the installations integrated into the facings through the inner shaft formed by said nodes.

This solution also makes it possible to ensure the watertightness of the inner working space of the node and the coating or adjacent layers comprising the facing into which said pore is integrated.

Thus, from the aesthetic standpoint, the equipment can adopt any type of physical presence upon reaching the surface, given that the removable node cover can integrate any type of finish, blending in even with the facing into which it is inserted so that the visual continuity of the finish can be ensured, if so required.

Similarly, the method is compatible with the customary types of physical implementation of the facings, especially if they are designed as floors, such that different solution can be adopted, from a totally dry installation to wet placement, including the integration of the technical nodes in through arrangements between different architectural spaces by means of their being recessed into the underfloor.

In view of the foregoing, the described method of integrating building installations into a multifunctional facing or floor and the reticulated assembly for carrying out said integration are an innovation in structural and constituent features unknown to date for such a purpose, these being reasons which, in conjunction with the practical usefulness thereof, endow it with sufficient grounds for being granted the privilege of exclusiveness for which application is being filed.

### DESCRIPTION OF THE FIGURES

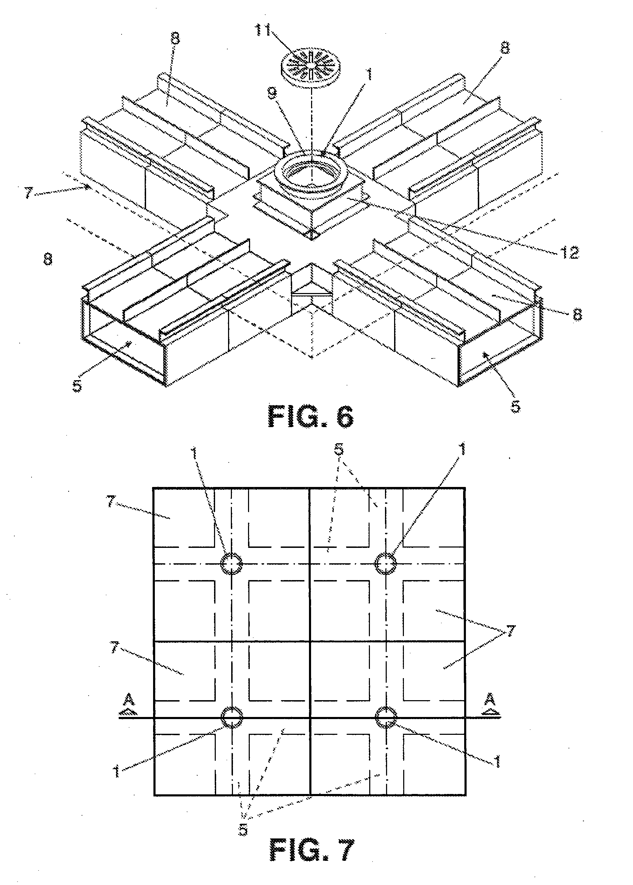

To complete the description which is being provided of the invention and to aid toward a better understanding of the distinguishing features thereof, a set of drawings is attached to this specification as an integrating part thereof, in which the following has been shown for non-limiting purposes of illustration:
Figures numbers 1-A, 1-B, 1-C and 1-D show respective front perspective views of a room in a building, showing the different facings, floor, ceiling or walls, into which the reticular assembly making it possible to carry out the method for integrating installations comprising the object of the invention can be integrated.
Figures numbers 2-A, 2-B and 2-C show, in respective perspective views, different options for the configuration of the section of the nodes dealt with in the method of the invention.
Figure number 3 shows a diagram of a node, showing different installations running through the same in different directions.
Figure number 4 shows a front perspective view of a building providing a diagram of the reticulated assembly of nodes and channels according to the invention for the integration of the installations.
Figure number 5.- Shows a perspective view of one of the modules comprising the reticulated assembly in which the accessible node can be seen with the ducts connected to it and the elements incorporated on the inside thereof shown outside, as an example of a preferred embodiment of the invention.
Figure number 6 shows a view similar to that shown in the immediately preceding figure, open at the top, in this case, at the area of the channels and showing the closing cover provided for the node.
Figure number 7 shows a plan view of a group of modules comprising the reticulated assembly of the invention.
Figure number 8 shows a cross-sectional view, as per cross-section A-A-shown in Fig. 7, showing two examples of nodes of the advocated reticulated assembly integrated into the underfloor of a building, showing the ventilation installation with open air circuit at one of said nodes, and the other with the air circuit closed, also showing how the reticulated assembly comprised of the node and channel modules are integrated into the facing.

### PREFERRED EMBODIMENT OF THE INVENTION

In view of the aforementioned figures and in accordance with the numbering adopted, one example of a preferred embodiment of the invention can be seen, comprising the parts and elements described in detail in following.

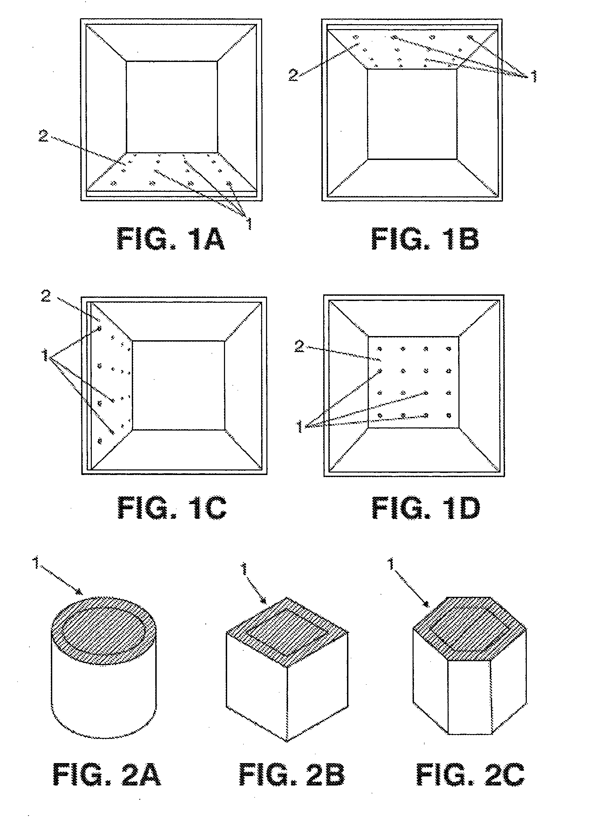

Thus, the method for integrating building installations into a multifunctional facing or floor which the invention advocates comprises the creation of a number of nodes (1) which, in the form of openings or pores, are made in one of the facings (2) of the building, which, as can be seen in Figures 1-A to 1-D, can be either the floor, ceiling or any of the walls of each room.

The aforesaid nodes (1) are configured preferably in a circular cross-section, as shown in Figure 2-A, being able to also be of other shapes, as shown in the examples in Figures 2-B and 2-C, preferably polyhedral.

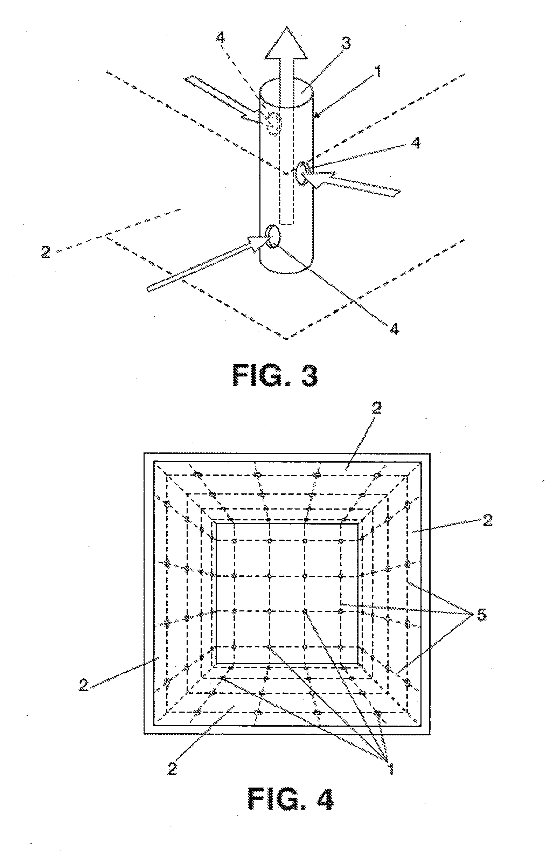

Figure 3 shows one example of a node (1), showing that it is an opening in the facing (2) determining a space or housing (3) with accesses (4) to allow the passage and connection of the different installations for which it is used, shown in Figure 3 by means of arrows, the existence of channels (5) being envisioned for making said passage possible interconnecting said nodes (1) to one another forming a network of passageways, the geometric proportions and mechanical capacities of which will be suitable for carrying out the different functions required in each case, in which the intersection of said channels (5) comprise the nodes (1), as can be seen in Figure 4.

Thus, the nodes (1) of interest in each case serve as technical bays, incorporating into the housing (3) determined by the terminals, devices, apparatuses and/or elements (6) of the different installations, such that any node (1) of the aforesaid network can incorporate an electrical outlet, a stopcock, a recessed light, a screen, a pivot turn for panels, doors, screens or other elements, as well as making the passage of pipes, ducts or wiring for air, water, electrical networks, gas, telecommunications, etc. possible.

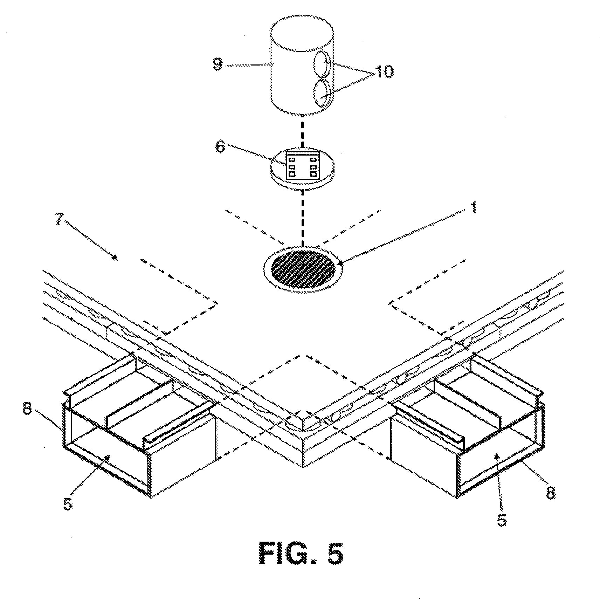

Preferentially, the described method for integrating installations into the facing (2) is carried out by means of a reticulated assembly comprised of modules (7) which will comprise the aforesaid network of passageways, each one of which is comprised of one node (1) shaping a central opening, from which the channels (5) run out radially, interconnecting them, preferably four arranged in a cross, as showing in Figs. 5, 6 and 7, being comprised of tubular ducts (8), made, for example of PVC.

Each node (1) also incorporates a box (9) for containing or housing on its interior the elements (6) of the installations properly protected, said box being equipped with side openings (10) as well as a cover (11) which can be opened for accessing its interior and which preferably has a threaded screw-on closure which may be of different configurations depending on the different needs of each installation.

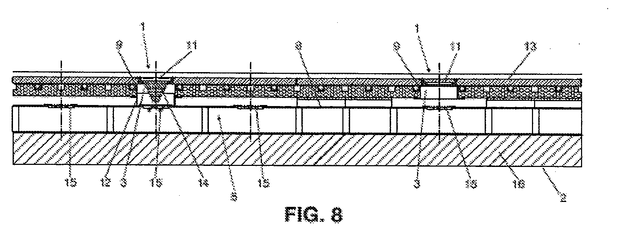

Additionally, to make the multi-functionality of the system possible, that is to say, the combined incorporation of different elements into one same node (1), an extendible supplement (12) is optionally provided, comprised, for example, of a telescopic section added to the box (9), as shown in Fig. 8, such that the interior of the node (1) can house different elements (6) of different installations separate from one another, ruling out any problems resulting from different services co-existing and also making it possible for the box (9) to be adaptable to the needs in each case.

It is important to underline that the nodes (1) are integrated into the accessible thickness of the facing (2) such that they do not involve an lessening of the space, given that they do not create any protrusion above the outer layer (13) of the facing (2).

Figure 8 shows the reticulated assembly of the invention in an example of implementation thereof for a ventilation installation integrated into an underfloor, showing on the two modules (7) depicted, in addition to the nodes (1) and channels (5) which connect them with one another, the different elements (6) of the installation, in this case an air-control diffuser cap (14) and various flow control valves (15), given that this is a ventilation installation, it being shown that said diffuser cap (14) is provided solely on one of the nodes (1) of the two show, whilst no such element has been provided on the other node (1) which simply has a removable cover (11) making it possible for it to be used for another installation.

It is also shown that, in both cases, the nodes (1) are integrated within the limits of the facing (2), which, in this case, is a floor, the modules (7) being incorporated on the underfloor (16) without protruding out through the tiled floor comprising the outer layer (13) of said facing.

The nature of this invention as well as the way of putting it into practice having been sufficiently described, it is not deemed necessary for a longer explanation to be provided in order for any expert on the subject to understand the scope thereof and the advantages stemming from the same, specifically stating that, within the essentiality thereof, it can be put into practice in other embodiments differing in detail from that stated as an example and which will equally be under the protection which is being requested provided that the main principle thereof is not altered, changed or modified.

## Claims

1. METHOD FOR INTEGRATING INSTALLATIONS OF BUILDINGS INTO A MULTIFUNCTIONAL FACING OR FLOOR, applicable for allowing the passage of pipes, ducts or wiring etc. of air, water, electrical network, gas, telecommunications or other installations and to incorporate into said facing (2) electrical outlets, stopcocks, recessed lights, screens, pivot turns of panels, doors, screens or other elements, wherein consisting of creating a number of nodes (1) in the form of openings or pores, in at least one of the facings (2) of the rooms in the building, whether the floor, ceiling or any of the walls; in which each node (1) determines a housing (3) with accesses (4) apart for the passage and connection of the different installations for which it is intended, through channels (5) which, as passageways, have been made interconnecting said nodes (1) to one another, comprising a network of passageways of variable geometric proportions and mechanical capacities, in which the intersection of said channels (5) is comprised of said nodes (1); and in which some of all of the nodes (1) incorporate in said housing (3) the terminals, devices, apparatuses and/or elements (6) of the different installations, and/or allow the passage of pipes, ducts or wiring of said installations.

2. METHOD FOR INTEGRATING INSTALLATIONS OF BUILDINGS INTO A MULTIFUNCTIONAL FACING OR FLOOR according to Claim 1 hereinabove, wherein the nodes (1) are configured in a circular cross-section.

3. METHOD FOR INTEGRATING INSTALLATIONS OF BUILDINGS INTO A MULTIFUNCTIONAL FACING OR FLOOR according to Claim 1 hereinabove, wherein the nodes (1) are configured in a polyhedral cross-section.

4. METHOD FOR INTEGRATING INSTALLATIONS OF BUILDINGS INTO A MULTIFUNCTIONAL FACING OR FLOOR according to Claim 1 and 2 or 3 hereinabove, wherein the nodes (1) are integrated into the useable thickness of the facing (2) and do not cause any type of protrusion above the outer layer (13) of said facing (2).

5. RETICULATED ASSEMBLY FOR CARRYING OUT THE INTEGRATION OF INSTALLATIONS IN BUILDINGS IN THE MULTIFUNCTIONAL FACING OR FLOOR, according to the method described in Claims 1 to 4 hereinabove, wherein it comprises some modules (7) to shape the network of passageways, each one of which is comprised of a node (1) forming a central opening, incorporated into the interior of which is a box (9) equipped with side openings (10) from which the channels (5), consisting of pipelines (8) which connect them to one another run out radially.

6. RETICULATED ASSEMBLY FOR CARRYING OUT THE INTEGRATION OF INSTALLATIONS IN BUILDINGS IN A MULTIFUNCTIONAL FACING OR FLOOR, according to Claim 5 hereinabove, wherein the box (9) of the nodes (1) has a removable cover (11) for accessing its interior, which has different configurations according to the different needs of each installation.

7. RETICULATED ASSEMBLY FOR CARRYING OUT THE INTEGRATION OF INSTALLATIONS IN BUILDINGS IN A MULTIFUNCTIONAL FACING OR FLOOR, according to Claim 6 hereinabove, wherein the cover (11) is screwed on.

8. RETICULATED ASSEMBLY FOR CARRYING OUT THE INTEGRATION OF INSTALLATIONS IN BUILDINGS IN A MULTIFUNCTIONAL FACING OR FLOOR, according to Claim 5 hereinabove, wherein the box (9) has an extendible supplement (12) for housing different elements (6) of different installations in an isolated manner and making it possible for the box (9) to be adaptable to the needs of each case.

9. RETICULATED ASSEMBLY FOR CARRYING OUT THE INTEGRATION OF INSTALLATIONS IN BUILDINGS IN A MULTIFUNCTIONAL FACING OR FLOOR, according to Claim 8 hereinabove, wherein the extendable supplement (12) consists of a telescopic section added to the box (9).

10. RETICULATED ASSEMBLY FOR CARRYING OUT THE INTEGRATION OF INSTALLATIONS IN BUILDINGS IN A MULTIFUNCTIONAL FACING OR FLOOR, according to Claim 5, wherein each module (7) comprise a node (1) and four channels (5) arranged in a cross.
